# EUROPEAN PATENT APPLICATION

(11) **EP 4 632 388 A1**
(43) Date of publication of application: **15.10.2025**
(21) Application number: 25168054.2
(22) Date of filing: 02.04.2025
(51) Int. Cl.: G01P 15/08, G01P 21/00

(54) **EQUALIZATION OF MICROELECTROMECHANICAL SENSORS USING STORED MEASURED PARAMETERS**

(30) Priority: 08.04.2024 US 202463631040 P; 17.03.2025 US 202519081408
(71) Applicant: Analog Devices, Inc., Wilmington, MA 01887 (US)
(72) Inventor: NGUYEN, Khiem, Wilmington, 01887 (US); SPIRER, Adam, Wilmington, 01887 (US); GUO, Shanglin, Wilmington, 01887 (US); PHAM, Long, Wilmington, 01887 (US)
(74) Representative: Wallin, Nicholas James

(57) **Abstract**

Apparatus and methods for equalizing microelectromechanical systems (MEMS) sensors are disclosed. In certain embodiments, measured sensor parameters of a MEMS sensor are stored in a non-volatile memory (NVM) of a sensor signal processor used to process a sensor output signal of the MEMS sensor. The measured sensor parameters are retrieved by a digital signal processor (DSP) and used for equalizing sensor data provided to the DSP by the sensor signal processor during operation. The measured sensor parameters can be determined at test, per individual part, by measurements of the MEMS sensor's characteristics, and thus equalize the MEMS sensor while accounting for manufacturing and/or processing variations.

## Description

### Priority Claim

This European patent application claims priority from United States Provisional Patent Application No. 63/631,040, filed 8 April 2024, and from United States Patent Application No. 19/081,408 filed 17 March 2025.

### Field of the Disclosure

Embodiments of the invention relate to electronics, and more particularly to equalization of microelectromechanical systems (MEMS) sensors.

### BACKGROUND

MEMS sensors, such as MEMS accelerometers and MEMS gyroscopes, can include a proof mass that moves in response to inertial forces. Additionally, the MEMS inertial sensor can include a sensing structure, such as a capacitive sensing structure having a first set of fingers (moveable fingers) attached to the proof mass that move with respect to a second set of fingers (fixed fingers) anchored to a substrate. The moveable fingers and the fixed fingers can be interdigitated to form comb finger sets that serve as a capacitance sensing structure. In other examples, the sensing structure can be implemented using piezo sensing or other suitable structures.

In an accelerometer, a proof mass can be suspended by spring tethers over a substrate and provide a resistance against acceleration forces. Additionally, the sensing structure measures a deflection of the proof mass resulting in a sensor output with amplitude proportional to acceleration. In another example, a gyroscope can include a proof mass that moves in a first direction (for example an X-direction) while the sensing structure detects a Coriolis effect in a second direction (for example, a Y-direction) arising from movement of the proof mass.

### SUMMARY OF THE DISCLOSURE

In certain embodiments herein, measured sensor parameters of a MEMS sensor are stored in a non-volatile memory (NVM) of a sensor signal processor used to process a sensor output signal of the MEMS sensor. The measured sensor parameters are retrieved by a digital signal processor (DSP) and used for equalizing sensor data provided to the DSP by the sensor signal processor during operation. Such measured sensor parameters are determined at test, per individual part, by measurements of the MEMS sensor's characteristics, such as a gain versus frequency characteristic. Additionally, the measurements are used to compute the measured sensor parameters, which are then written to the NVM.

In one aspect, a method of equalization includes obtaining, from a non-volatile memory, measured sensor parameters of a MEMS sensor that is coupled to a sensor signal processor. The method further includes determining, based on the measured sensor parameters, one or more equalization filter coefficients for an equalizer of a digital signal processor. The method further includes obtaining, from the sensor signal processor, sensor data indicating a sensor output signal of the MEMS sensor. The method further includes equalizing, using the equalization filter of the digital signal processor, the sensor data.

In another aspect, a MEMS signal processing system includes a MEMS sensor and a sensor signal processor coupled to the MEMS sensor and configured to output sensor data indicating a sensor output signal of the MEMS sensor. The sensor signal processor includes a non-volatile memory storing measured sensor parameters of the MEMS sensor. The MEMS signal processing system further includes a digital signal processor configured to receive the sensor data and the measured sensor parameters from the sensor signal processor, the digital signal processor further configured to determine one or more equalization filter coefficients based on the measured sensor parameters and to equalize the sensor data based on the one or more equalization filter coefficients.

In another aspect, a MEMS module includes a MEMS sensor and a sensor signal processor coupled to the MEMS sensor and configured to output sensor data indicating a sensor output signal of the MEMS sensor. The sensor signal processor includes a non-volatile memory storing measured sensor parameters of the MEMS sensor. The sensor signal processor is further configured to provide the sensor data and the measured sensor parameters to a digital signal processor that equalizes the sensor data based on the measured sensor parameters.

### BRIEF DESCRIPTION OF THE DRAWINGS

Figure 1A is a schematic diagram of one embodiment of a measuring and test setup for a MEMS module.
Figure 1B is a schematic diagram of one embodiment of a MEMS signal processing system including a digital signal processor (DSP) for equalizing sensor data from the MEMS module of Figure 1A.
Figure 2 is a schematic diagram of another embodiment of a MEMS module.
Figure 3 is a graph of one example of plots of magnitude versus frequency for MEMS sensor response characteristics and filtering.
Figure 4A is a schematic diagram of another embodiment of a MEMS signal processing system.
Figure 4B is a schematic diagram of an equalization filter of the MEMS signal processing system of Figure 4A.
Figure 5A is a graph of one example of a magnitude versus frequency response for the transmitted sensor signal of Figure 4A.
Figure 5B is a graph of one example of a magnitude versus frequency response for the equalization filter of Figures 4A and 4B.
Figure 5C is a graph of one example of a magnitude versus frequency response for the equalized sensor signal of Figure 4A.
Figure 5D is an expanded view of a passband of the equalized sensor signal of Figure 5C.

### DETAILED DESCRIPTION OF EMBODIMENTS

The following detailed description of embodiments presents various descriptions of specific embodiments of the invention. However, the invention can be embodied in a multitude of different ways. In this description, reference is made to the drawings where like reference numerals may indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings.

The raw sensor output signal of a MEMS sensor, such as a MEMS accelerometer, can include a response characteristic for which equalization is desired.

For example, a MEMS sensor response characteristic can include a peak (associated with a quality-factor) that occurs at a resonant frequency. To compensate for such peaking, it is desirable to provide equalization to the sensor output signal. For example, an equalization notch can be applied by an equalizer to compensate for the peaking characteristic of the MEMS sensor response.

In certain embodiments herein, measured sensor parameters of a MEMS sensor are stored in a non-volatile memory (NVM) of a sensor signal processor used to process a sensor output signal of the MEMS sensor. The measured sensor parameters are retrieved by a digital signal processor (DSP) and used for equalizing sensor data provided to the DSP by the sensor signal processor during operation.

The measured sensor parameters can include, in one example, the measured resonant frequency of the MEMS sensor, the quality factor (Q-factor or Q) of the MEMS sensor, and/or a gain of the signal channel of the sensor signal processor. In another example, the measured sensor parameters can include one or more equalization filter coefficients for an equalization filter of the DSP.

Such measured sensor parameters are determined at test, per individual part, by measurements of the MEMS sensor's characteristics, such as a gain versus frequency characteristic. Additionally, the measurements are used to compute the measured sensor parameters, which are then written to the NVM. The measurements of the sensor's characteristics can be obtained using any suitable test equipment, such as automated test equipment (ATE) that includes a signal generator that generates a test signal (for example, of a desired amplitude and frequency) for the part and a signal analyzer that analyzes the response of the part to the test signal to determine the measurements of the sensor's characteristics.

Thus, measured sensor parameters suitable for equalizing the MEMS sensor to account for manufacturing and/or processing variation can be used by a downstream DSP to equalize the MEMS sensor. This allows the sensor signal processor to output the sensor data without equalization, and thus with low group delay. In one example, the sensor signal processor can output the sensor data in a pulse density modulation (PDM) format associated with very low group delay and a coding format suitable for merging with other types of data, such as microphone data. In another example, the sensor signal processor can output the sensor data in a pulse coding modulation (PCM) format in which the PCM data need not be equalized by the sensor signal processor (but rather can be equalized by the downstream DSP).

In certain implementations, the MEMS sensor and the sensor signal processor are part of a common module, while the DSP is external to the module.

In addition to equalizing the sensor data, the DSP can also perform any other desired processing, for instance, decimating the sensor data prior to equalizing the sensor data.

The sensor signal processor can include an analog front-end (AFE) circuit that processes the sensor output signal of the MEMS sensor to faithfully reproduce the response characteristic of the MEMS sensor so that the equalization can be accurately performed by the downstream DSP.

In some implementations a bandwidth of the analog front-end circuit is a multiple of two or more of (for instance, at least five times) a resonant frequency of the MEMS sensor and/or a signal range of the analog front-end circuit accommodates a peaking of the MEMS sensor arising from a quality-factor of the MEMS sensor.

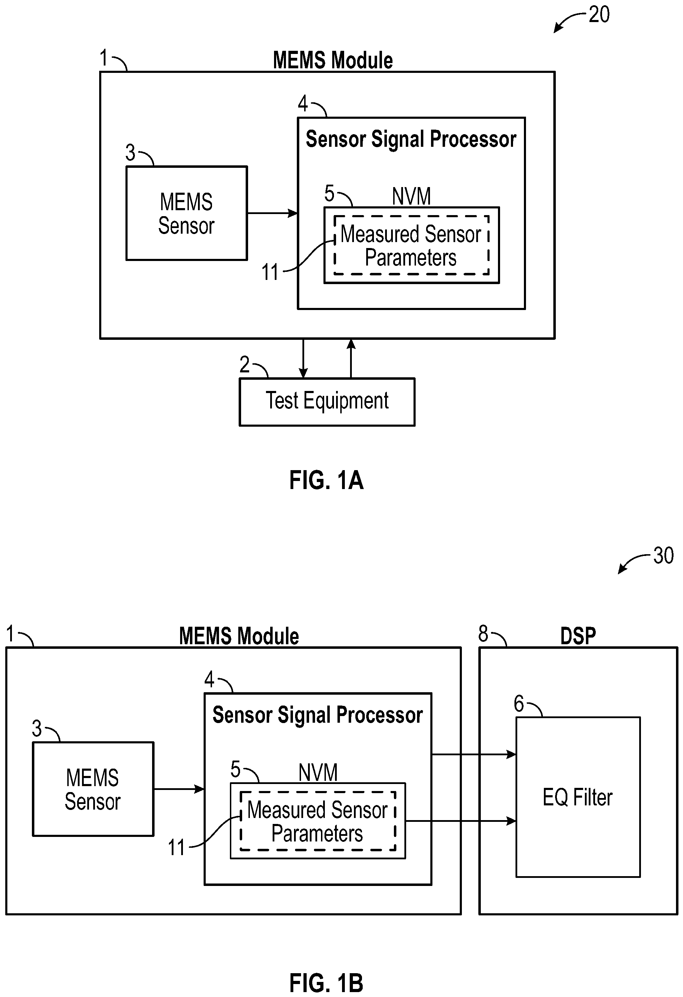

Figure 1A is a schematic diagram of one embodiment of a measuring and test setup 20 for a MEMS module 1. The MEMS module includes a MEMS sensor 3 and a sensor signal processor 4 for processing a sensor output signal from the MEMS sensor 3.

The sensor signal processor 4 can include any desired circuitry for processing the sensor signal from the MEMS sensor 3. Examples of circuitry of the sensor signal processor 4 include, but are not limited to, amplifiers, demodulators, filters (for instance, anti-aliasing filters and/or decimation filters), and/or sigma-delta modulators. For example, since in this embodiment the sensor output signal from the MEMS sensor 3 is an analog signal, the sensor signal processor 4 can include an analog front-end (AFE) for processing the sensor output signal from the MEMS sensor 3.

The sensor signal processor 4 also includes a non-volatile memory (NVM) 5. Such an NVM 5 can be on-chip with the sensor signal processor 4 and/or otherwise associated with the sensor signal processor 4.

As shown in Figure 1A, the test equipment 2 is used to measure actual parameters associated with the MEMS sensor 3 and/or the sensor signal processor 4. For example, the test equipment 2 can include a signal generator that generates a test signal (for example, of a desired amplitude and frequency) for the part and a signal analyzer that analyzes the response of the part to the test signal to determine the measurements of the sensor's characteristics.

In the illustrated embodiment, the measured sensor parameters 11 are stored in the NVM 5. The measured sensor parameters 11 reflect the actual characteristics of the MEMS module 1 after manufacturing. Thus, the measured sensor parameters 11 account for process and/or manufacturing variation of the MEMS module 1. For example, the measured sensor parameters 11 can account for process variation of the MEMS sensor 3 and/or the sensor signal processor 4, part-specific parasitics of the MEMS module 1, and/or alignment errors in attaching the MEMS sensor 3 to a module substrate of the MEMS module 1.

Since the measured sensor parameters 11 are stored in the NVM 5, the MEMS module 1 can be deployed in a given application with part-specific data remaining stored therein, even when the MEMS module 1 is not receiving power.

The measured sensor parameters 11 can correspond to any desired parameters indicating the measurements by the test equipment 2 on the MEMS module 1. In one example, the measured sensor parameters 11 include a measured resonant frequency of the MEMS sensor 3, a Q-factor of the MEMS sensor 3, and/or a gain of a signal channel of the sensor signal processor 4. In another example, the measured sensor parameters 11 include one or more part-specific equalization filter coefficients suitable for equalizing sensor data that is outputted from the sensor signal processor 4.

Figure 1B is a schematic diagram of one embodiment of a MEMS signal processing system 30 including a digital signal processor (DSP) 8 for equalizing sensor data from the MEMS module 1 of Figure 1A.

In the illustrated embodiment, the DSP 8 has been provided for equalizing the sensor data from the sensor signal processor 4 of the MEMS module 1. The DSP 8 includes an equalization filter 6 that provides equalization based on the measured sensor parameters 11 stored in the NVM 5 of the MEMS module 1.

Thus, the equalization provided by the DSP 8 is specifically tailored for the MEMS module 1. For example, the equalization coefficients for the equalization filter 6 account for process and/or manufacturing variation of the MEMS module 1 since the measured sensor parameters 11 account for specific measurement results obtained during part-specific testing of the MEMS module 1.

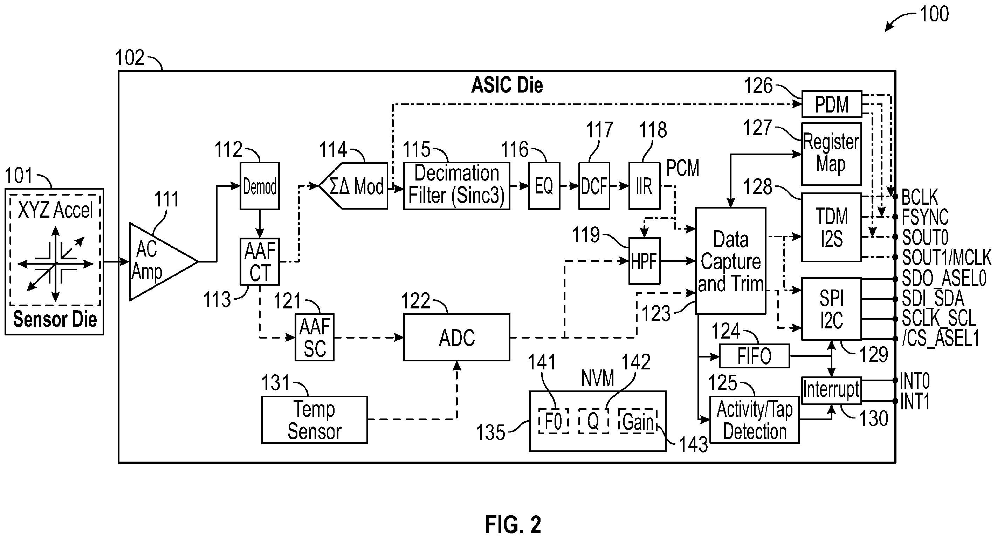

Figure 2 is a schematic diagram of another embodiment of a MEMS module 100. The MEMS module 100 includes a three-axis (XYZ) accelerometer sensor die 101 and a sensor signal processing die 102 implemented as an application specific integrated circuit (ASIC).

In the illustrated embodiment, the sensor signal processing die 102 includes an AC amplifier 111, a demodulator 112, and a continuous time (CT) anti-aliasing filter (AAF) 113, which collective operate as an AFE of the sensor signal processing die 102. The sensor signal processing die 102 further includes a sigma delta (ΣΔ) modulator 114, a decimation filter 115 (for instance, implementing sinc3 filtering), an equalizer 116, a droop compensation filter (DCF) 117, an infinite-impulse response (IIR) filter 118, a high pass filter (HPF) 119, a switched capacitor (SC) AAF 121, an analog-to-digital converter (ADC) 122, a data capture and trim circuit 123, a first-in-first-out (FIFO) buffer 124, an activity/tap detection circuit 125, a PDM formatting circuit 126, a register map 127, a time-division multiplexing (TDM) inter-integrated circuit sound (I2S) interface 128, an inter-integrated circuit (I2C) serial peripheral interface (SPI) 129, an interrupt circuit 130 (providing interrupts on pins INTO and INT1), a temperature sensor 131, and an NVM 135.

Although one embodiment of a sensor signal processing die is shown in Figure 2, sensor signal processors can be implemented in a wide variety of ways. For example, the sensor signal processing die can include more or fewer components, a different arrangement of components, and/or implemented in other ways as desired for a particular signal processing application. Accordingly, other implementations are possible.

Pulse density modulation (PDM) is a signaling format used to transport 1-bit digital data. PDM is used, for instance, in automotive and consumer audio applications. PDM provides short group delay in the signal path, which allows a user to customize signal bandwidth based on a decimation filter design.

Although PDM provides a number of advantages, certain signal processing functions, such as equalization, cannot be applied. In contrast, a PCM format allows for equalization, but with higher group delay relative to a PDM format. Further, in some applications an end-user may desire to provide more complex equalization and/or other signal processing techniques to sensor data that closely tracks a raw sensor output signal from the MEMS sensor die 101.

In the illustrated embodiment, the sensor signal processing die 102 includes multiple modes, including a PCM mode in which the on-chip equalizer 116 is used to equalize the sensor output signal. The PCM mode can be associated with outputting sensor data on the TDM I2S 128, which is associated with pins BCLK, FSYCN, SOUT0, and SOUT1/MCLK in this example. The sensor data is processed by the decimation filter 115, the equalizer 116, the DCF 117, and the IIR 118, and thus can be both decimated and equalized on-chip.

With continuing reference to Figure 2, the sensor signal processing die 102 also includes a PDM mode in which the PDM formatting circuit 126 operates to send the un-equalized sensor output signal from the output of the ΣΔ module 114. Thus, rather than using the on-die equalizer 116, the sensor signal processing die 102 includes the PDM mode in which the un-equalized sensor data is provided in PDM format.

When using the PDM mode, the decimation filter 115, the equalizer 116, the DCF 117, and the IIR 118 are bypassed, and thus no frequency response equalization is provided when the PDM signal path is elected. The PDM mode can use a portion of the TDM I2S interface 128 in this example, for instance, the pins BCLK, FSYNC, and SOUT.

When using the PDM mode, the sensor bandwidth can be limited to a narrow range below the resonant frequency of the MEMS sensor die 101.

To allow for downstream equalization in the PDM mode, the sensor signal processing die 102 includes the NVM 135 storing various measured sensor parameters associated with the MEMS module 100. The measured sensor parameters can be retrieved by a downstream DSP, for instance, by performing a read operating using the SPI 12C interface 129 (which includes pins SDO_ASEL0, SDI_SDA, SCLK_SCL, /CS_ASEL1, in this example).

In this embodiment, the measured sensor parameters stored in the NVM 135 include a measured resonant frequency F0 141 of the MEMS sensor 101, the Q-factor 142 of the MEMS sensor 101, and/or a gain 143 of the sensor signal processor's signal channel (for instance, a gain of signal path through the AC amplifier 111, the demodulator 112, and the CT AAF 113).

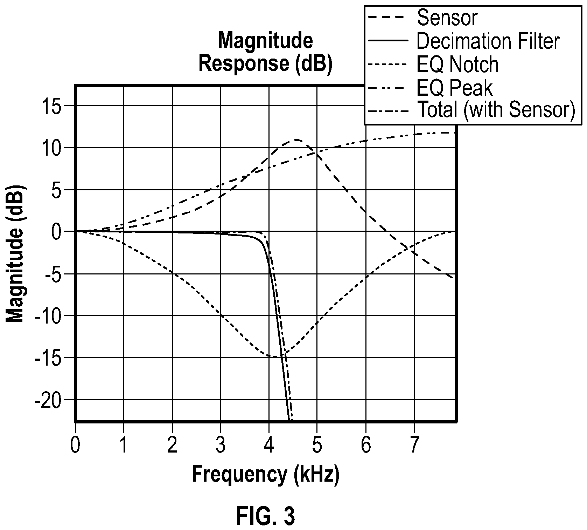

Figure 3 is a graph of one example of plots of magnitude versus frequency for MEMS sensor response characteristics and filtering.

In Figure 3, a raw sensor output signal of a MEMS sensor is depicted. As shown in Figure 3, the sensor output signal has a resonant frequency and a Q-factor.

With continuing reference to Figure 3, the graph also includes a decimation filter response, equalization notch response, and an equalization peaking response. By performing such signal processing on the sensor output signal, a total response characteristic is provided. The total response characteristic equalizes the sensor output signal to account for the peaking and resonance characteristics of the MEMS sensor.

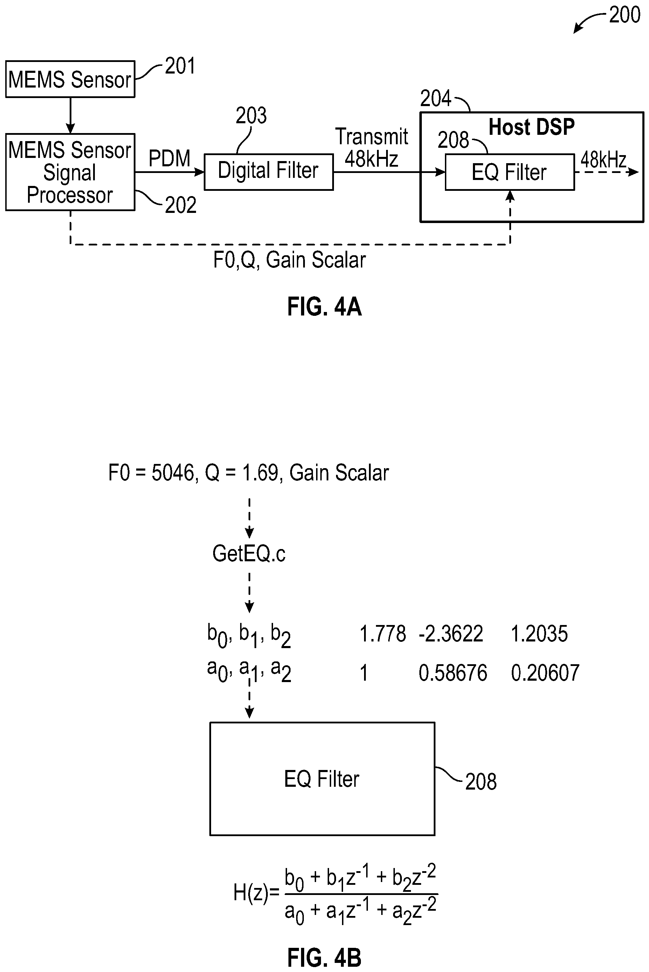

Figure 4A is a schematic diagram of another embodiment of a MEMS signal processing system 200. The MEMS signal processing system 200 includes a MEMS sensor 201, a sensor signal processor 202 that outputs a PDM sensor output signal, a digital filter 203 that filters (for instance, decimates if desired) the PDM sensor output signal to generate a 48kHz transmitted sensor signal, and a host DSP 204 that implements an equalization filter 208 to generate a 48kHz equalized sensor signal. The equalization filter 208 operates based on a resonant frequency F0, a quality factor Q, and a gain scalar retrieved from an NVM of the sensor signal processor 202. Figure 4B is a schematic diagram of the equalization filter 208 of the MEMS signal processing system 200 of Figure 4A.

As shown in Figure 4B, the specific F0, Q, and gain scalar values are retrieved by the DSP 204 and processed (using a get equalization coefficients function GetEQ.c, in this example) to generate custom equalization coefficients (b₀, b₁, b₂, a₀, a₁, a₂, in this example) for the equalization filter 208. The equalization filter 208 performs equalization using the coefficients, for instance, according to the z-transform function H(z) = (b₀ + b₁z⁻¹ + b₂z⁻²)/ (a₀ + a₁z⁻¹ + a₂z⁻²), in this example.

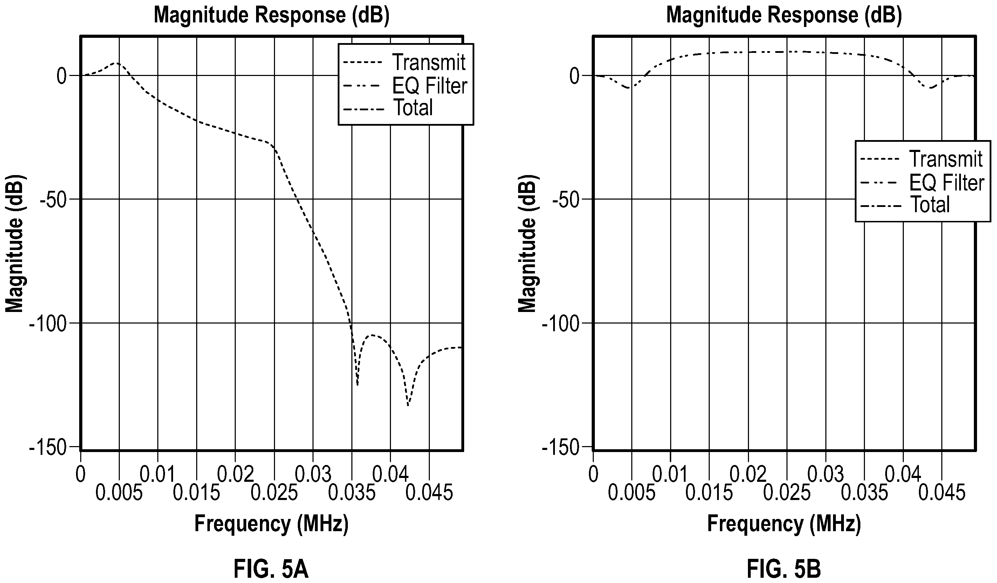

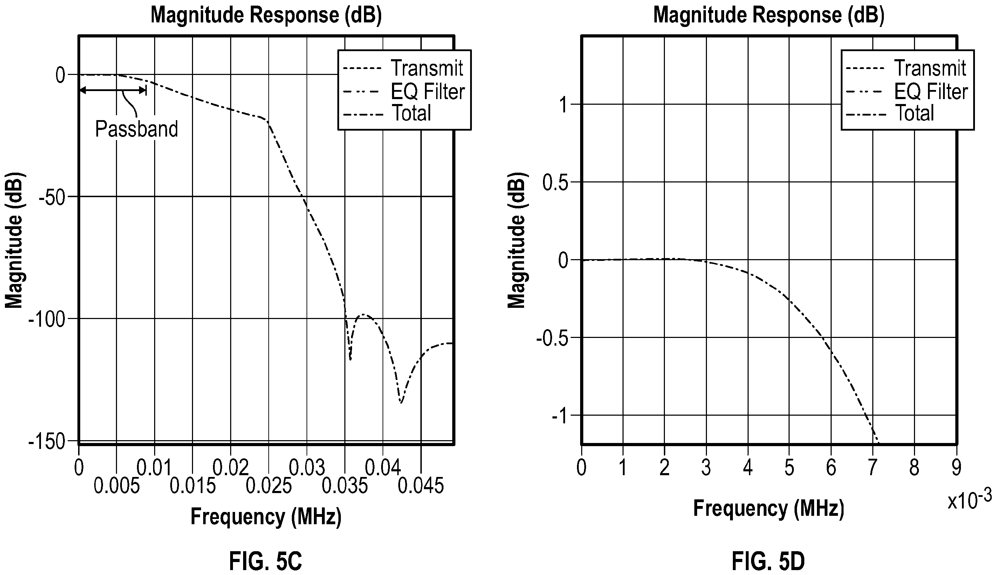

Figure 5A is a graph of one example of a magnitude versus frequency response for the transmitted sensor signal of Figure 4A. Figure 5B is a graph of one example of a magnitude versus frequency response for the equalization filter 208 of Figures 4A and 4B. Figure 5C is a graph of one example of a magnitude versus frequency response for the equalized sensor signal of Figure 4A. Figure 5D is an expanded view of a passband of the equalized sensor signal of Figure 5C.

With reference to Figures 5A to 5D, prior to equalization, the transmitted sensor signal includes peaking over the desired passband. However, such peaking is removed by the equalization provided by the equalization filter 208. For example, as shown in Figure 5D the magnitude versus frequency response of the equalized sensor signal over the passband is relatively flat.

### Conclusion

The foregoing description may refer to elements or features as being "connected" or "coupled" together. As used herein, unless expressly stated otherwise, "connected" means that one element/feature is directly or indirectly connected to another element/feature, and not necessarily mechanically. Likewise, unless expressly stated otherwise, "coupled" means that one element/feature is directly or indirectly coupled to another element/feature, and not necessarily mechanically. Thus, although the various schematics shown in the figures depict example arrangements of elements and components, additional intervening elements, devices, features, or components may be present in an actual embodiment (assuming that the functionality of the depicted circuits is not adversely affected).

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while the disclosed embodiments are presented in a given arrangement, alternative embodiments may perform similar functionalities with different components and/or circuit topologies, and some elements may be deleted, moved, added, subdivided, combined, and/or modified. Each of these elements may be implemented in a variety of different ways. Any suitable combination of the elements and acts of the various embodiments described above can be combined to provide further embodiments. Accordingly, the scope of the present invention is defined only by reference to the appended claims.

Although the claims presented here are in single dependency format for filing at the USPTO, it is to be understood that any claim may depend on any preceding claim of the same type except when that is clearly not technically feasible.

There follows a list of numbered features defining particular embodiments of the present disclosure. Where a numbered feature refers to one or more earlier numbered features then those features should be considered in combination.
1. A method of equalization, the method comprising:
   obtaining, from a non-volatile memory, measured sensor parameters of a microelectromechanical systems (MEMS) sensor that is coupled to a sensor signal processor;
   determining, based on the measured sensor parameters, one or more equalization filter coefficients for an equalizer of a digital signal processor;
   obtaining, from the sensor signal processor, sensor data indicating a sensor output signal of the MEMS sensor; and
   equalizing, using the equalization filter of the digital signal processor, the sensor data.
2. The method of feature 1, wherein the measured sensor parameters include a resonant frequency and a quality-factor of the MEMS sensor.
3. The method of feature 2, wherein the measured sensor parameters further include a measured gain of a signal channel of the sensor signal processor.
4. The method of any of features 1 to 3, wherein the measured sensor parameters include at least one equalization filter coefficient.
5. The method of any of features 1 to 4, wherein the sensor data is in a pulse density modulation (PDM) format.
6. The method of any of features 1 to 5, wherein the non-volatile memory is on the sensor signal processor, the method further comprising obtaining the measured sensor parameters using an interface of the sensor signal processor.
7. The method of any of features 1 to 6, further comprising decimating the sensor data prior to equalizing the sensor data.
8. The method of any of features 1 to 7, further comprising generating the sensor data based on the sensor output signal of the MEMS sensor using an analog front-end circuit of the sensor signal processor, wherein a bandwidth of the analog front-end circuit is a multiple of a resonant frequency of the MEMS sensor.
9. The method of feature 6, wherein a signal range of the analog front-end circuit accommodates a peaking of the MEMS sensor arising from a quality-factor of the MEMS sensor.
10. The method of any of features 1 to 9, wherein the MEMS sensor comprises a MEMS accelerometer.
11. A microelectromechanical systems (MEMS) signal processing system comprising:
   a MEMS sensor;
   a sensor signal processor coupled to the MEMS sensor and configured to output sensor data indicating a sensor output signal of the MEMS sensor, wherein the sensor signal processor comprises a non-volatile memory storing measured sensor parameters of the MEMS sensor; and
   a digital signal processor configured to receive the sensor data and the measured sensor parameters from the sensor signal processor, the digital signal processor further configured to determine one or more equalization filter coefficients based on the measured sensor parameters and to equalize the sensor data based on the one or more equalization filter coefficients.
12. The MEMS signal processing system of feature 8, wherein the measured sensor parameters include a resonant frequency and a quality-factor of the MEMS sensor.
13. The MEMS signal processing system of feature 9, wherein the measured sensor parameters further include a measured gain of a signal channel of the sensor signal processor.
14. The MEMS signal processing system of any of features 8 to 13, wherein the measured sensor parameters include at least one equalization filter coefficient.
15. The MEMS signal processing system of any of features 8 to 14, wherein the sensor data is in a pulse density modulation (PDM) format.
16. The MEMS signal processing system of any of features 8 to 15, wherein the digital signal processor is further configured to decimate the sensor data prior to equalizing the sensor data.
17. The MEMS signal processing system of any of features 8 to 16, wherein the sensor signal processor further includes an analog front end circuit configured to generate the sensor data based on the sensor output signal of the MEMS sensor, wherein a bandwidth of the analog front-end circuit is a multiple of a resonant frequency of the MEMS sensor.
18. The MEMS signal processing system of feature 12, wherein a signal range of the analog front-end circuit accommodates a peaking of the MEMS sensor arising from a quality-factor of the MEMS sensor.
19. The MEMS signal processing system of any of features 8 to 18, wherein the MEMS sensor comprises a MEMS accelerometer.
20. A microelectromechanical systems (MEMS) module comprising:
   a MEMS sensor; and
   a sensor signal processor coupled to the MEMS sensor and configured to output sensor data indicating a sensor output signal of the MEMS sensor, wherein the sensor signal processor comprises a non-volatile memory storing measured sensor parameters of the MEMS sensor,
   wherein the sensor signal processor is further configured to provide the sensor data and the measured sensor parameters to a digital signal processor that equalizes the sensor data based on the measured sensor parameters.

## Claims

1. A method of equalization, the method comprising:
obtaining, from a non-volatile memory, measured sensor parameters of a microelectromechanical systems (MEMS) sensor that is coupled to a sensor signal processor;
determining, based on the measured sensor parameters, one or more equalization filter coefficients for an equalizer of a digital signal processor;
obtaining, from the sensor signal processor, sensor data indicating a sensor output signal of the MEMS sensor; and
equalizing, using the equalization filter of the digital signal processor, the sensor data.

2. The method of Claim 1, wherein the measured sensor parameters include one or more of:
a) a resonant frequency;
b) a quality-factor of the MEMS sensor;
c) a measured gain of a signal channel of the sensor signal processor; and/or
d) at least one equalization filter coefficient.

3. The method of any of Claims 1 or 2, wherein the sensor data is in a pulse density modulation (PDM) format.

4. The method of any of Claims 1 to 3, wherein the non-volatile memory is on the sensor signal processor, the method further comprising obtaining the measured sensor parameters using an interface of the sensor signal processor.

5. The method of any of Claims 1 to 4, further comprising decimating the sensor data prior to equalizing the sensor data.

6. The method of any of Claims 1 to 5, further comprising generating the sensor data based on the sensor output signal of the MEMS sensor using an analog front-end circuit of the sensor signal processor, wherein a bandwidth of the analog front-end circuit is a multiple of a resonant frequency of the MEMS sensor.

7. The method of Claim 6, wherein a signal range of the analog front-end circuit accommodates a peaking of the MEMS sensor arising from a quality-factor of the MEMS sensor.

8. A microelectromechanical systems (MEMS) signal processing system comprising:
a MEMS sensor;
a sensor signal processor coupled to the MEMS sensor and configured to output sensor data indicating a sensor output signal of the MEMS sensor, wherein the sensor signal processor comprises a non-volatile memory storing measured sensor parameters of the MEMS sensor; and
a digital signal processor configured to receive the sensor data and the measured sensor parameters from the sensor signal processor, the digital signal processor further configured to determine one or more equalization filter coefficients based on the measured sensor parameters and to equalize the sensor data based on the one or more equalization filter coefficients.

9. The MEMS signal processing system of Claim 8, wherein the measured sensor parameters include one or more of:
a) a resonant frequency;
b) a quality-factor of the MEMS sensor;
c) a measured gain of a signal channel of the sensor signal processor; and/or
d) at least one equalization filter coefficient.

10. The MEMS signal processing system of any of Claims 8 or 9, wherein the sensor data is in a pulse density modulation (PDM) format.

11. The MEMS signal processing system of any of Claims 8 to 10, wherein the digital signal processor is further configured to decimate the sensor data prior to equalizing the sensor data.

12. The MEMS signal processing system of any of Claims 8 to 11, wherein the sensor signal processor further includes an analog front end circuit configured to generate the sensor data based on the sensor output signal of the MEMS sensor, wherein a bandwidth of the analog front-end circuit is a multiple of a resonant frequency of the MEMS sensor.

13. The MEMS signal processing system of Claim 12, wherein a signal range of the analog front-end circuit accommodates a peaking of the MEMS sensor arising from a quality-factor of the MEMS sensor.

14. The method of any of claims 1 to 7, or the MEMS signal processing system of any of Claims 8 to 13, wherein the MEMS sensor comprises a MEMS accelerometer.

15. A microelectromechanical systems (MEMS) module comprising:
a MEMS sensor; and
a sensor signal processor coupled to the MEMS sensor and configured to output sensor data indicating a sensor output signal of the MEMS sensor, wherein the sensor signal processor comprises a non-volatile memory storing measured sensor parameters of the MEMS sensor,
wherein the sensor signal processor is further configured to provide the sensor data and the measured sensor parameters to a digital signal processor that equalizes the sensor data based on the measured sensor parameters.
